Europäisches Patentamt

(19) European Patent Office

Office européen des brevets

(11) Publication number : **0 311 403 B1**

(12) # EUROPEAN PATENT SPECIFICATION

(45) Date of publication of patent specification :
21.11.91 Bulletin 91/47

(51) Int. Cl.⁵ : **B60C 15/06**

(21) Application number : 88309326.2

(22) Date of filing : 06.10.88

(54) Pneumatic tyre.

(30) Priority : 07.10.87 JP 254402/87

(43) Date of publication of application :
12.04.89 Bulletin 89/15

(45) Publication of the grant of the patent :
21.11.91 Bulletin 91/47

(84) Designated Contracting States :
DE FR GB

(56) References cited :
GB-A- 1 241 633
US-A- 4 627 479

(73) Proprietor : SUMITOMO RUBBER INDUSTRIES
LIMITED
No. 1-1, Tsutsui-cho 1-chome
Chuo-ku Kobe-shi Hyogo 651 (JP)

(72) Inventor : Oku, Masahiro
5-6 Tamatsukuri Honmachi Tennouji-ku
Osaka-shi Osaka-fu (JP)
Inventor : Idei, Mitsushige
3-1-33 Suigencho
Toyota-shi Aichi-ken (JP)

(74) Representative : Stewart, Charles Geoffrey
SP TYRES UK LIMITED Tyre Technical
Division
Fort Dunlop Birmingham B24 9QT (GB)

## Description

The present invention relates to a pneumatic tyre, and more particularly to a pneumatic t~ which is capable of enhancing the steer stability and the ride comfort in a car.

Pneumatic radial tyres which are provided with a metal cord belt layer are widely used, because they are superior in high speed durability, stable in vehicle steering, wear resistance, fuel efficiency etc. In recent years, with improvements in the performance of vehicles, still better stability in steering is required as well as enhanced other properties. Also improved vehicle comfort is required.

In general, the steering stability and the ride comfort are mutually antinomic properties. The steer stability depends greatly upon the transverse rigidity of the tyres, and an increase in the transverse rigidity of the tyres allows the car steering stability to be improved. However, in radial tyres, the transverse rigidity is affected by the bend rigidity of the sidewalls and the bead portions. If the bead apex rubber is increased in hardness with the simultaneous aid of the addition of a reinforcing layer or the like, to thereby increase this bending rigidity, the longitudinal rigidity of the whole tyre is simultaneously increased. As a result, shocks exerted on the tread of a tyre by the surface of the road are more easily transmitted through the sidewalls to the beads and rims and finally to the vehicle, thereby resulting in a deterioration of the ride comfort. It is, therefore an object of the present invention to provide a pneumatic tyre in which both the steering stability and the ride comfort are increased at the same time without sacrificing the other properties.

A known tyre presenting the above mentioned features is shown, e.g. in GB-A-1241633.

According to one aspect of the present invention, a pneumatic tyre comprises a pair of bilaterally opposed bead portions, sidewall portions extending radially outwardly one from each bead portion, a tread portion connecting the outer edges of said sidewall portions, a carcass comprising at least one ply of cords arranged at an angle of 70 to 90 degrees to the equatorial plane of the tyre and turned up around annular bead cores disposed in said bead portions from the inside to the outside thereof to be secured thereto and bead apexes of hard rubber, one disposed in each bead portion and extending radially outwardly from the respective bead cores characterised in that the shore A hardness of the bead apex which is to be located on the outside of a vehicle when the tyre is mounted on the vehicle is higher than that of the other bead apex which is to be located on inside of the vehicle, and the ratio of the higher hardness to the lower hardness is not less than 1.05.

Preferably, the height L7A of one bead apex in one bead portion from a bead base line B is higher than the height L7B of the other bead apex in the other bead portion from the bead base line B, and the ratio L7A/L7B of the higher height L7A to the lower height L7B is not less than 1.1.

Some embodiments of the present invention will now be described by way of example only with reference to the accompanying drawings, in which :

Figure 1 and Figure 2 are cross sectional views of the tyre of the present invention and

Figure 3 is an explanatory diagram in connection with the measurement of the transverse rigidity of tyre.

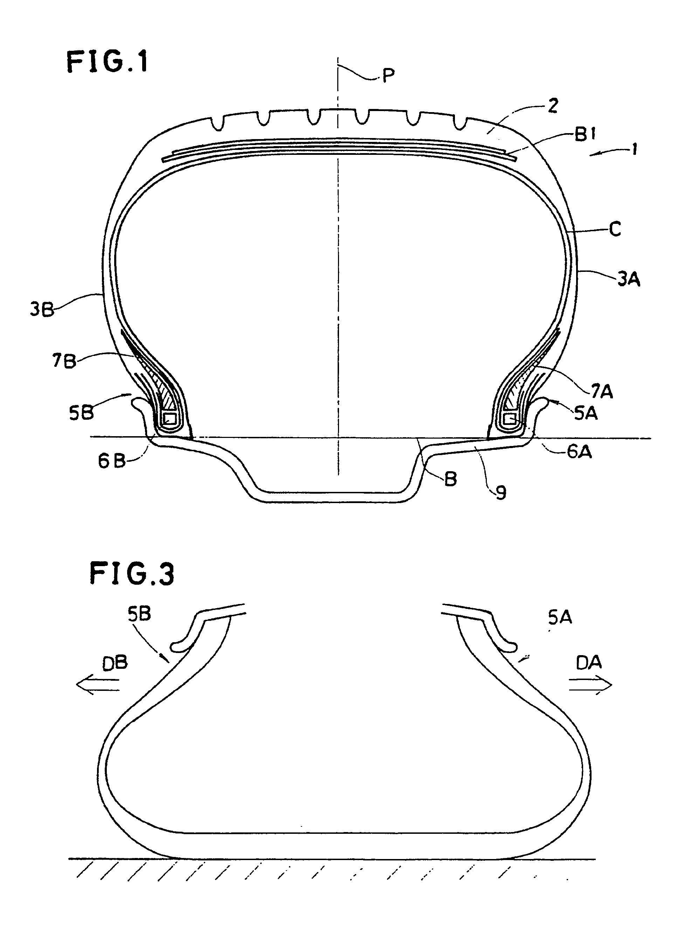

In Figure 1 the tyre 1 is mounted on a standard rim 9 and inflated to regular pressure. The tyre has a pair of bead portions 5A, 5B on the right and left hand sides respectively of the equatorial plane P, sidewall portions 3A, 3B extending radially outwardly from the respective bead portions 5A, 5B, and a tread portion 2 connecting the outside edges of the sidewall portions. Moreover, the tyre 1 has a reinforcement carcass C, a belt layer B1 reinforcing the tread and the bead portions 5A, 5B respectively are provided with an annular bead core 6a, 6B. The beads are also reinforced by bead apexes 7B. The tyre and rim 9 are attached to a vehicle so that the bead portion 5A is located on the outside of the vehicle, and the bead portion 5B is on the inside of the vehicle.

The above mentioned carcass C comprises at least one ply of cords inclined with respect to the equatorial plane P by 70 to 90 degrees. The cords may be made of an organic fibrous material such as Nylon, polyester, aromatic polyamide or the like, or glass fibre, carbon fibre, metal or any other similar material. In this example the carcass comprises one ply of cords.

The above mentioned bead apexes 7A, 7B are both made of hard rubber of which the shore A hardness is not less than 65. The shore hardness HSA of the bead apex 7A at the bead portion 5A, which is located outside the vehicle when mounted on the vehicle, is greater than the Shore hardness HSB of the other bead apex 7B which is positioned inside on the vehicle. In practice, the bead apexes 7A and 7B are differentiated in hardness such that the ratio of HSA to HSB is not less than 1.05 and more preferably not less than 1.1. With such a difference in hardness between the bead apexes 7A and 7B, the outside bead portion 5A is provided with a greater bending rigidity than the inside bead portion 5B.

The tyres are subjected to transverse force during turning of the vehicle. If the tyre deforms less in axial deformation, namely, in transverse deformation, the steer stability of the car is improved. In this connection, the inventors have observed that the transverse deformation which occurs during the turning operation of the vehicle is concentrated because of load transfer on the tyres which are located on the outside of the vehicle while the vehicle is turning and more particularly on the sidewall portions and bead portions on the external sides of those tyres located on the outside of the vehicle. On the basis of this observation, the inventors have discovered that an increase in the bending rigidity only of a single side of each tyre allows a decrease in transverse deformation during turning of the vehicle. In order to achieve an increase in the bending rigidity of one bead portion, the rubber from which the bead apex of the said one bead portion is made is of increased hardness as compared with the other bead apex rubber. For this reason, in practice, the radial tyres of the present invention are attached to a vehicle, with their increased stiffness bead portions 5A located on the outside of the vehicle.

To utilise only a differentiation in hardness between the two bead apex rubbers minimises the increase in the manufacturing cost of the tyre, because both apexes remain unchanged in their shape. However, in addition to such differentation in hardness, an unsymmetrical shape and/or an unsymmetrical construction as described hereinafter may be used to give a still greater effect.

It should be noted that if the ratio HSA/HSB between the Shore A hardness of the rubbers of the bead apexes 7A and 7B is less than 1.05 the improvement in the steer stability is not achieved.

Moreover, the Shore A hardness of the rubber of each bead apex is not less than 65 and preferably in the range of 65 to 95.

If the Shore A hardness is less than 65, the bead apexes do not provide their original purpose. On the other hand, if the Shore A hardness exceeds 95, vibration from the tyre tread surfaces is more easily transmitted to the vehicle and even if only one bead apex 7A is furnished with such higher Shore A hardness than 95 this occurs. As a result the ride comfort is inevitably deteriorated.

It is more desirable that the Shore A hardness of each bead apex rubber is 70 to 95 and the ratio HSA/HSB therebetween is not less than 1.1.

It is also desirable that the Shore A hardness of the bead apex rubber 7B in the bead portion 5B which is located inside the vehicle when the tyre has been fitted to a vehicle, is set to be lower than that of the bead apex rubber of conventional type tyres so as to hold the longitudinal rigidity of the whole tyre at the same level as that of a conventional tyre or to decrease it to a smaller level than that of conventional tyres, whereby the ride comfort can be further improved.

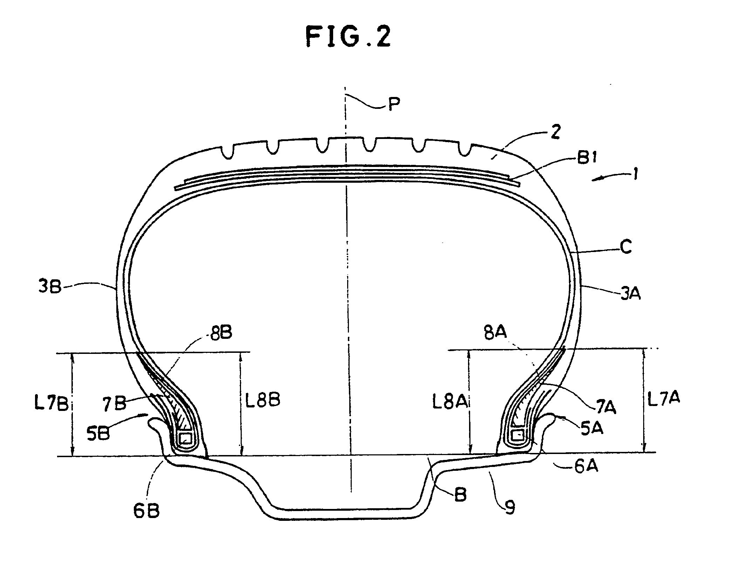

Figure 2 shows a second embodiment of the present invention in which the height L7A of the bead apex 7A of the bead portion 5A which is located outside the vehicle when the tyre has been attached to a vehicle, is greater than the height L7B of the bead apex 7B located on the inside of the vehicle. Both heights are measured from the base line B, and the ratio L7A/L7B therebetween is not less than 1.1. If the ratio is less than 1.1, any real effect upon differentiation in the rigidity cannot be obtained.

Moreover, in this embodiment, the bead portions 5A and 5B are provided with bead fillers 8A and 8B. respectively, and the ratio L8A/L8B between the heights L8A and L8B of the top ends of the fillers 8A and 8B from the base line B is not less than 1.1. If the ratio is less than 1.1, the difference in height between the bead fillers does not produce any real effect upon differentiation in the bending rigidity of the two sidewalls.

The bead fillers 8A and 8B respectively comprise at least one ply of organic fibre or metallic cords.

In the example of Figure 2, the fillers 8A and 8B are disposed between the bead apexes 7A, 7B and the carcass C. However, these bead fillers may be arranged on the axially inner side of the carcass C or the axially outer side of the turnup of the carcass C.

Although the bead portions 5A and 5B on both sides of the tyre in this example, are provided with bead fillers 8A and 8B respectively, only one bead portion 5A may be provided with a bead filler 8A to enhance the operation of the present invention.

The tyres of the present invention are so mounted on a vehicle that the bead portions 5A and 5B are located respectively outside and inside the vehicle. Accordingly, transverse force which acts upon the tyres while cornering is received by the bead portion 5A which has the higher bending rigidity, and the transverse deformation of the tyre is reduced, whereby the steer stability of the car is improved. Moreover, the smaller longitudinal rigidity of the bead portion 5B restricts the transmission of impact from the road surface to the vehicle. That is to say, the bead portion 5B operates to absorb the impact, whereby the ride comfort improved.

## Working Examples

Tyres of 165.85R13 in size constructed as shown in Figure 1 and 2, were made in accordance with the specifications given in Table 1, and indoor tests using a plane bedplate and outdoor feel tests using an actual car were conducted.

In the tests, a conventional type tyre which has the same members and identical construction in both sides of the equatorial plane P was used as a reference tyre, and as working examples of the present invention, three kinds of tyres, examples 1, 2 and 3 were prepared.

Example 1 tyre is identical construction to the reference tyre, but the hardness of the bead apex rubber

EP 0 311 403 B1

differs between the left hand side bead portion 5A and the right hand side portion 5B, and the ratio of hardness between both the side bead apex rubber is 1.2.

Thus the bead portion 5A is higher in bending rigidity than the bead port 5B.

The second example tyre has the same construction as that of example 1 but the height L7A of the bead apex 7A is differentiated from the height L7B of the bead apex 7B to further magnify the difference in the bending rigidity between the bead portions 5A and 5B.

In example 3 the construction still remains identical to that of example 1 but a variation is made between the height L8A of the filler 8A and the height L8B of the bead filler 8B, and accordingly example 3 has a greater difference in bending rigidity between both bead portions as compared with any of the other tyres. Also however the bead portion 5B is so reduced in rigidity that example 3 has the smallest longitudinal rigidity.

In order to obtain the longitudinal rigidity and transverse rigidity of each test tyre, the tyre was inflated to its regular internal pressure, and erected uprightly on the testing bedplate. While each test tyre had load exerted thereupon in the perpendicular direction to the axial direction of the tyre, the variation in the deflection of the tyre by such load application was measured and plotted in the form of a load curve (or a deflection curve) and the slope of the curve at the standardised regular load point was obtained as a measure of the longitudinal rigidity for that tyre. The results obtained were indicated in Table 1 by setting for the reference tyre in index number 100, wherein the higher the value the greater is the longitudinal rigidity.

Next, in order to obtain the transverse rigidity of each test tyre, the tyre is placed upright on the plane bedplate and transverse load is exerted thereupon, with the above mentioned standard regular load in the perpendicular direction also applied. The transverse rigidity was determined by the relationship between the transverse load applied and the resulting transverse displacement.

Figure 3 shows a diagrammatic sectional view of a tyre to explain the transverse rigidity thereof.

The transverse force corresponding to a transverse displacement of 25 mm was measured in both directions DA and DB, where the direction DA corresponds to a direction indicating the location of the bead portion 5A of greater bending rigidity from the equator plane, and the reverse direction DB accordingly corresponds to a direction indicating that of the bead portion 5B of smaller bending rigidity.

The measured transverse rigidity of each test tyre is indicated on Table 1 setting that of the reference tyres as index number 100. The three example tyres differed in transverse rigidity depending upon the directions DA and DB of the transversal force.

The above mentioned four kinds of tyres were respectively mounted on a passenger car of 1200 cc which was manufactured in Japan, and the car was driven on a predetermined course so that the tyres were subjected to feel tests in which the tyres were checked for the feel of the steer stability and the ride comfort. In this case, as far as the tyres of the present invention were concerned, their attachment to the passenger car was such that the bead portions 5A of greater bending rigidity were located on the outside of the car.

In Table 1, the real feeling readings obtained from the sensory tests are indicated by index numbers. The index number 100 in Table 1 is for the real feelings of the reference tyres. The higher the index number is, the better is the real feeling.

The tyres of each construction of the present invention obtained superior results in ride comfort on a car and steer stability.

As described above, the present invention can improve both steer stability and the ride comfort which are antinomic from the viewpoints of the prior art.

### Table 1

| | Ref. | Ex.1 | Ex.2 | Ex.3 |
|---|---|---|---|---|
| **Shore Hardness of Bead Apex** | | | | |
| Outside Bead Apex | 85 | 93 | 93 | 93 |
| Inside Bead Apex | 85 | 77 | 77 | 77 |
| Hardness Ratio | 1.0 | 1.2 | 1.2 | 1.2 |
| **Height of Bead Apex (mm)** | | | | |
| Outside Bead Apex | 25 | 25 | 30 | 30 |
| Inside Bead Apex | 25 | 25 | 20 | 20 |
| Height Ratio | 1.0 | 1.0 | 1.5 | 1.5 |
| **Height of Bead filler (mm)** | | | | |
| Outside Bead Apex | 25 | 25 | 25 | 30 |
| Inside Bead Apex | 25 | 25 | 25 | 20 |
| Height Ratio | 1.0 | 1.0 | 1.0 | 1.5 |
| **Longitudinal Rigidity Index** | 100 | 101 | 86 | 95 |
| **Transversal Rigidity Index** | | | | |
| | 100 | 103 | 107 | 109 |
| | 100 | 98 | 95 | 94 |
| **Steering Stability** | | | | |
| Real Feeling Index | 100 | 105 | 107 | 110 |
| **Ride Comfortableness** | | | | |
| Real Feeling Index | 100 | 103 | 105 | 105 |

## Claims

1. A pneumatic tyre comprising a pair of bilaterally opposed bead portions (5A, 5B) sidewall portions (3A, 3B) extending radially outwardly one from each bead portion (5A, 5B) a tread portion (2) connecting the outer edges of said sidewall portions (3A 3B), a carcass (C) comprising at least one ply of cords arranged at an angle of 70 to 90 degrees to the equatorial plane of the tyre and turned up around annular bead cores (6A, 6B) disposed in said bead portion from the inside to the outside thereof to be secured thereto, and bead apexes (7A, 7B) of hard rubber one disposed in each bead portion and extending radially outwardly from the respective bead cores (6A, 6B) characterised in that the Shore A hardness of the bead apex (5A) which is to be located on the outside of a vehicle when the tyre is mounted on the vehicle is higher than that of the other bead apex (5B) which is to be located on inside of the vehicle, and the ratio of the higher hardness to the lower hardness is not less than 1.05.

2. A pneumatic tyre according to claim 1 characterised in that the height L7A of the outer bead apex (5A) from a bead base line B is higher than the height L7B of said inner bead apex (5B) from the bead base line B,

EP 0 311 403 B1

and the ratio L7A, L7B of the higher height L7A to the lower height L7B is not less than 1.1.

3. A pneumatic tyre according to claims 1 or 2 characterised in that ⁀e said bead portions are respectively provided with reinforcing bead fillers 8A and 8B each of which compris̄ ar least one ply of cords, the height L8A of the top edge of the bead filler 8A in said outer bead portion 5A from the bead base line B is higher than the height L8B of the top edge of said other bead filler 8B in said L8B of the top edge of said other bead filler 8B in said other bead portion 5B from the bead base line B, and the ratio L8A/L8B of the higher L8A to the lower height L8B is not less than 1.1.

**Patentansprüche**

1. Luftreifen, welcher umfaßt ein Paar bilateral einander gegenüberliegende Wulstabschnitte (5A, 5B), radial jeweils von jedem Wulstabschnitt (5A, 5B) nach außen abstehende Seitenwandabschnitte (3A, 3B), einen die Außenkanten der Seitenwandabschnitte (3A, 3B) verbindenden Laufstreifenabschnitt (2), eine Karkasse (C), welche mindestens eine Lage von mit einem Winkel von 70° bis 90° zur Äquatorialebene des Reifens angeordnete Korde umfaßt und um in dem Wulstabschnitt angeordnete ringförmige Wulstkerne (6A, 6B) nach oben von der Innenseite zu der Außenseite zur Befestigung daran zurückgeschlagen ist und Wulstreiter (7A, 7B) aus hartem Gummi, die jeweils einzeln in jedem Wulstabschnitt angeordnet sind und sich radial von dem jeweiligen Wulstkern (6A, 6B) nach außen erstrecken, dadurch gekennzeichnet, daß die in Shore A gemessene Härte des Wulstreiters (5A), der der Außenseite eines Fahrzeuges zu sitzen kommt, wenn der Reifen an dem Fahrzeug angebracht ist, höher ist als die des anderen Wulstreiters (5B), der an der Innenseite des Fahrzeugs zu sitzen kommt, und das Verhältnis der höheren Härte zu der niedrigeren Härte nicht kleiner als 1,05 ist.

2. Luftreifen nach Anspruch 1, dadurch gekennzeichnet, daß die Höhe L7A des äußeren Wulstreiters (5A) von einer Wulstgrundlinie B höher als die Höhe L7B des inneren Wulstreiters (5B) von der Wulstgrundlinie B ist, und daß das Verhältnis L7A : L7B der höheren Höhe L7A zu der niedrigeren Höhe L7B nicht größer als 1,1 ist.

3. Luftreifen nach den Ansprüchen 1 oder 2, dadurch gekennzeichnet, daß die Wulstabschnitte jeweils mit verstärkenden Wulstfüllern 8A und 8B versehen sind, welche jeweils mindestens eine Kordlage umfassen, wobei die Höhe L8A der oberen Kante des Wulstfüllers 8A in dem äußeren Wulstbereich 5A von der Wulstgrundlinie B größer als die Höhe L8B der oberen Kante des anderen Wulstfüllers 8B in dem anderen Wulstabschnitt 5B von der Wulstgrundlinie B, und das Verhältnis L8A/L8B der größeren Höhe L8A zu der geringeren Höhe L8B nicht kleiner als 1,1 ist.

**Revendications**

1. Pneumatique comprenant une paire de parties de talons (5A, 5B) placées des deux côtés opposés, des parties de flanc (3A, 3B) disposées radialement vers l'extérieur depuis chaque partie de talon (5A, 5B), une partie de bande de roulement (2) raccordant les bords externes des parties de flanc (3A, 3B), une carcasse (C) comprenant au moins une nappe de câblés disposés suivant un angle de 70 à 90° par rapport au plan équatorial du pneumatique et repliés autour de tringles annulaires (6A, 6B) placées dans la partie de talon de l'intérieur vers l'extérieur de celle-ci pour être fixées à celle-ci, et des pointes de bourrage (7A, 7B) de talon formées d'un caoutchouc dur, les pointes étant placées chacune dans une partie de talon et étant disposées radialement vers l'extérieur à partir de la tringle respective (6A, 6B), caractérisé en ce que la dureté Shore A de la pointe de bourrage de talon (5A) qui se trouve à l'extérieur du véhicule lorsque le pneumatique est monté sur le véhicule est supérieure à celle de l'autre pointe de bourrage de talon (5B) qui doit être placée à l'intérieur du véhicule, et le rapport de la dureté relativement élevée à la dureté relativement faible n'est pas inférieur à 1,05.

2. Pneumatique selon la revendication 1, caractérisé en ce que la hauteur L7A de la pointe de bourrage de talon externe (5A) par rapport à une droite de référence de talon B est supérieure à la hauteur L7B de la pointe de bourrage de talon interne (5B) par rapport à la droite de référence B de talon, et le rapport L7A/L7B de la hauteur relativement grande L7A à la hauteur relativement faible L7B n'est pas inférieur à 1,1.

3. Pneumatique selon la revendication 1 ou 2, caractérisé en ce que les parties de talon ont respectivement des organes de bourrage de talon (8A, 8B) de renforcement comportant chacun au moins une nappe de câblés, la hauteur L8A du bord supérieur de l'organe de bourrage de talon (8A) de la partie de talon externe (5A) par rapport à la droite de référence B de talon est supérieure à la hauteur L8B du bord supérieur de l'autre organe de bourrage de talon (8B) dans l'autre partie de talon (5B) par rapport à la droite de référence B de talon, et le rapport L8A/L8B de la hauteur relativement grande L8A à la hauteur relativement petite L8B n'est pas inférieur à 1,1.

6

## FIG.1

## FIG.3

# FIG.2